# EUROPEAN PATENT APPLICATION

(11) **EP 4 496 234 A1**
(43) Date of publication of application: **22.01.2025**
(21) Application number: 22931356.4
(22) Date of filing: 16.03.2022
(51) Int. Cl.: H04B 7/0456, H04W 72/00

(54) **SUB-BAND INFORMATION DETERMINATION METHOD AND APPARATUS, DEVICE, AND STORAGE MEDIUM**

(71) Applicant: Beijing Xiaomi Mobile Software Co., Ltd., Beijing 100085 (CN)
(72) Inventor: GAO, Xueyuan, Beijing 100085 (CN)
(74) Representative: Dehns Germany Partnerschaft mbB
(86) International application number: PCT/CN2022/081166
(87) International publication number: WO 2023/173319

(57) **Abstract**

The present disclosure relates to the field of communications, and disclosed are a sub-band information determination method and apparatus, a device, and a storage medium. The method comprises: receiving first downlink signaling; and in response to the first downlink signaling, selecting a determination mode of target sub-band information in determination modes of at least two pieces of sub-band information, wherein the sub-band information is information required by a terminal device to perform frequency selective precoding.

## Description

### TECHNICAL FIELD

The present disclosure relates to the field of communication, and in particular to a sub-band information determination method and apparatus, device, and storage medium.

### BACKGROUND

In the field of communication technology, multiple input multiple output (MIMO) based on large-scale antenna arrays can improve spectrum efficiency by increasing the number of antenna units.

Research objectives related to MIMO include increasing the number of uplink antennas from a maximum of 4 antennas to a maximum of 8 antennas, to support a higher uplink transmission rate compared with the downlink. When the number of uplink antennas is increased to a maximum of 8 antennas, frequency selective precoding can be considered.

The frequency selective precoding refers to precoding with the sub-band as the granularity. When performing the frequency selective precoding, the problem of how to determine sub-band information is involved.

### SUMMARY

The embodiments of the present disclosure provide a sub-band information determination method and apparatus, device, and storage medium. The technical solution is as follows:

According to one aspect of the embodiment of the present disclosure, there is provided a method for determining sub-band information, wherein the method is performed by a terminal device, the terminal device supports at least two determination manners for sub-band information, and the method includes:
receiving a first downlink signaling; and
selecting a target determination manner for sub-band information from the at least two determination manners for sub-band information, in response to the first downlink signaling;
wherein, the sub-band information is information required by the terminal device to perform frequency selective precoding.

According to one aspect of the embodiment of the present disclosure, there is provided a method for determining sub-band information, performed by a network device, and the method including:
sending a first downlink signaling to a terminal device, such that the terminal device selects a target determination manner for sub-band information from at least two determination manners for sub-band information, in response to the first downlink signaling;
wherein, the sub-band information is information required by the terminal device to perform frequency selective precoding.

According to another aspect of an embodiment of the present disclosure, there is provided an apparatus for determining sub-band information, wherein the apparatus includes: a receiving module and a processing module;
wherein the receiving module is configured to receive a first downlink signaling; and
the processing module is configured to select a target determination manner for sub-band information from the at least two determination manners for sub-band information, in response to the first downlink signaling;
wherein, the sub-band information is information required by the apparatus to perform frequency selective precoding.

According to another aspect of an embodiment of the present disclosure, there is provided an apparatus for determining sub-band information, wherein the apparatus includes: a sending module;
wherein the sending module is configured to send a first downlink signaling to a terminal device, such that the terminal device selects a target determination manner for sub-band information from at least two determination manners for sub-band information, in response to the first downlink signaling;
wherein, the sub-band information is information required by the terminal device to perform frequency selective precoding.

According to another aspect of an embodiment of the present disclosure, there is provided a terminal device, including: a processor; and a transceiver connected to the processor; wherein, the processor is configured to load and execute executable instructions to implement the method for determining sub-band information as described in the above aspects.

According to another aspect of an embodiment of the present disclosure, there is provided a network device, including: a processor; and a transceiver connected to the processor; wherein, the processor is configured to load and execute executable instructions to implement the method for determining sub-band information as described in the above aspects.

According to another aspect of an embodiment of the present disclosure, there is provided a computer-readable storage medium, having at least one instruction, at least one program, a code set or an instruction set stored thereon, wherein the at least one instruction, the at least one program, the code set or the instruction set is loaded and executed by a processor to implement the method for determining sub-band information as described in the above aspects.

The technical solution provided by the embodiment of the present disclosure may include the following beneficial effects:
The terminal device supports at least two determination manners for sub-band information, when the terminal device receives the first downlink signaling, the terminal device is triggered to select a target determination manner for sub-band information from the at least two determination manners for sub-band information, so that when the terminal device performs frequency selective precoding, the determination manner for sub-band information can be flexibly adjusted to apply to different scenarios.

It should be understood that the above general description and the detailed description below are only exemplary and explanatory, and cannot limit the present disclosure.

### BRIEF DESCRIPTION OF THE DRAWINGS

In order to more clearly illustrate the technical solutions in the embodiments of the present disclosure, the following will briefly introduce the drawings required for the description of the embodiments. The drawings in the following description are only some embodiments of the present disclosure. For ordinary technicians in this field, other drawings can be obtained based on these drawings without creative work.
FIG. 1 is a block diagram of a communication system according to an example embodiment;
FIG. 2 is a flow chart of a method for determining sub-band information according to an example embodiment;
FIG. 3 is a flow chart of a method for determining sub-band information according to another example embodiment;
FIG. 4 is a block diagram of an apparatus for determining sub-band information according to an example embodiment;
FIG. 5 is a block diagram of an apparatus for determining sub-band information according to another example embodiment;
FIG. 6 is a structural schematic diagram of a terminal device according to an example embodiment; and
FIG. 7 is a structural schematic diagram of a network device according to another example embodiment.

### DETAILED DESCRIPTION

The example embodiments will be described in detail here, and examples thereof are shown in the drawings. When the following description refers to the drawings, unless otherwise indicated, the same numbers in different drawings represent the same or similar elements. The implementations described in the following example embodiments do not represent all implementations consistent with the present disclosure. Instead, they are merely examples of apparatus and methods consistent with some aspects of the present disclosure as detailed in the appended claims.

In the New Radio (NR), considering from the perspective of codebook, uplink transmission includes codebook-based Physical Uplink Shared Channel (PUSCH) transmission and non-codebook-based PUSCH transmission.

### 1) Codebook-based PUSCH transmission

The basic design criterion for codebook-based PUSCH transmission is that the network device determines the rank of the uplink transmission and the corresponding uplink precoding matrix, and notifies the terminal device. The uplink precoding matrix is selected by the network device from the codebook.

### 2) Non-codebook-based PUSCH transmission

The non-codebook-based PUSCH transmission scheme is a spatial multiplexing technology. The difference between the non-codebook-based PUSCH transmission and the codebook-based PUSCH transmission is that precoding of the non-codebook-based PUSCH transmission is obtained based on certain criteria, rather than determining the precoding from a limited number of candidate values based on the fixed codebook.

In the NR system, a transmission scheme of obtaining uplink precoding based on channel reciprocity, i.e., a non-codebook-based PUSCH transmission scheme, is introduced. If the reciprocity of the uplink and downlink channels exists, the terminal device can calculate the downlink channel information based on the channel reciprocity, to obtain the uplink precoding matrix. If the channel reciprocity is good enough, the terminal device can obtain more accurate precoding through the downlink channel. Compared with the codebook-based PUSCH transmission scheme, the non-codebook-based PUSCH transmission scheme can save the overhead of precoding indication and obtain better performance at the same time.

In addition, considering from the perspective of scheduling, uplink transmission includes scheduling-free PUSCH transmission. The scheduling-free PUSCH transmission means that the network device configures the scheduling-free transmission resource for the terminal device, and the terminal device performs uplink transmission on the scheduling-free transmission resource.

In the relevant protocols, only uplink transmission up to a maximum of 4 layers is supported, while downlink transmission of a maximum of 8 layers can be supported. The relevant research objectives include enhancing the number of uplink transmission antennas to a maximum of 8 antennas, to support an uplink transmission rate comparable to the downlink transmission rate. The uplink transmission rate is higher than the uplink transmission rate of the traditional uplink transmission up to a maximum of 4 layers.

After the number of uplink antennas is increased to a maximum of 8 antennas, it is possible to consider implementing a support scheme for frequency selective precoding under the framework of the existing uplink PUSCH transmission. It can be understood that, when the number of uplink antennas increases, the number of data streams supported by uplink transmission increases, and the gain of performing frequency selective precoding is better.

In order to perform frequency selective precoding, it is necessary to consider the method for determining sub-band information.

Below, the solution provided by the embodiment of the present disclosure is described.

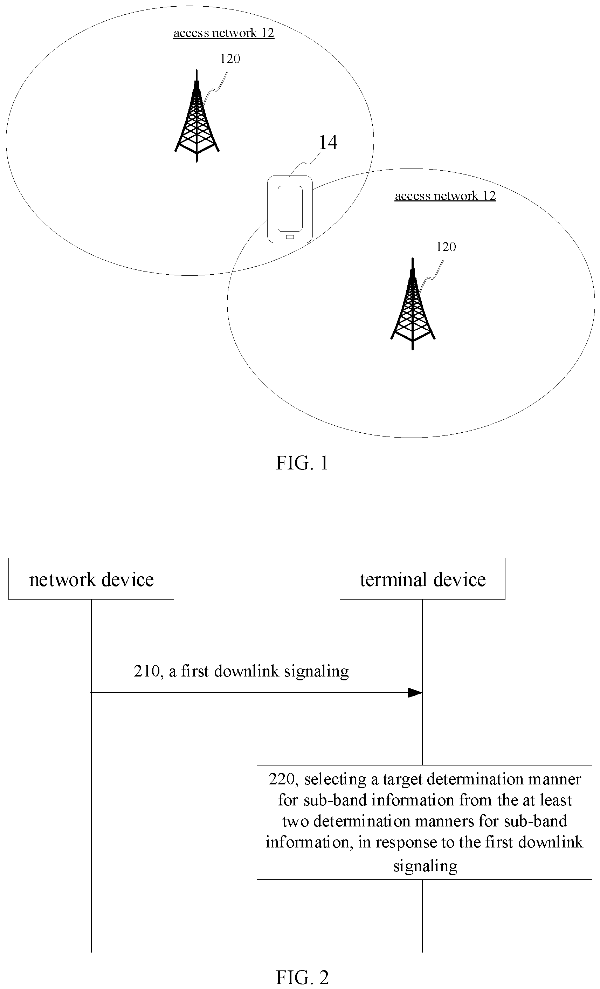

FIG. 1 shows a block diagram of a communication system provided by an example embodiment of the present disclosure, and the communication system may include: an access network 12 and a terminal device 14.

The access network 12 includes a plurality of access network devices 120. The access network device 120 may be a base station. The base station is an apparatus deployed in the access network to provide wireless communication functions for a terminal device (referred to as a "terminal") 14. The base station may include various forms of macro base stations, micro base stations, relay stations, access points, etc. In systems using different wireless access technologies, the names of devices with base station functions may be different, such as eNodeB or eNB in the Long Term Evolution (LTE) system; gNodeB or gNB in the 5G New Radio (NR) system. With the evolution of communication technology, the description of "base station" may change. For the convenience of description in the embodiments of the present disclosure, the above apparatuses that provide wireless communication functions for the terminal device 14 are collectively referred to as the network device.

The terminal device 14 may include various handheld devices, vehicle-mounted devices, wearable devices, computing devices or other processing devices connected to a wireless modem with wireless communication functions, as well as various forms of user devices, mobile stations (MS), terminal devices, etc. For the convenience of description, the above-mentioned devices are collectively referred to as the terminal device. The access network device 120 and the terminal device 14 communicate with each other through a certain kind of air interface technology, such as the Uu interface.

The technical solutions of the embodiments of the present disclosure can be applied to various communication systems, such as: Global System of Mobile Communication (GSM) system, Code Division Multiple Access (CDMA) system, Wideband Code Division Multiple Access (WCDMA) system, General Packet Radio Service (GPRS), Long Term Evolution (LTE) system, LTE Frequency Division Duplex (FDD) system, LTE Time Division Duplex (TDD) system, Advanced Long Term Evolution (LTE-A) system, New Radio (NR) system, evolution system of the NR system, LTE-based access to Unlicensed spectrum (LTE-U) system, NR-U system, Universal Mobile Telecommunication System (UMTS), Worldwide Interoperability for Microwave Access (WiMAX) communication system, Wireless Local Area Network (WLAN) system, Wireless Fidelity (WiFi), next generation communication systems or other communication systems.

Generally speaking, traditional communication systems support a limited number of connection and are easy to implement. However, with the development of communication technology, mobile communication systems will not only support traditional communication, but also support, for example, Device to Device (D2D) communication, Machine to Machine (M2M) communication, Machine Type Communication (MTC), Vehicle to Vehicle (V2V) communication and Vehicle to Everything (V2X) systems, or the like. The embodiments of the present disclosure can also be applied to these communication systems.

FIG. 2 shows a process flow chart of a method for determining sub-band information provided by an example embodiment of the present disclosure, which is applied in the communication system shown in FIG. 1, and the method includes following steps.

Step 210, the network device sends a first downlink signaling to the terminal device.

The network device can send a first downlink signaling to the terminal device. Correspondingly, the terminal device receives the first downlink signaling sent by the network device.

The first downlink signaling is sent by the network device to the terminal device, and is used to trigger the terminal device to select a manner for determining sub-band information.

Optionally, the first downlink signaling includes: Radio Resource Control (RRC); or, Medium Access Control Control Element (MAC CE); or, Downlink Control Information (DCI).

Step 220, the terminal device selects a target determination manner for sub-band information from the at least two determination manners for sub-band information, in response to the first downlink signaling.

The sub-band information is information required by the terminal device to perform frequency selective precoding.

The frequency selective precoding refers to a precoding manner for precoding with the sub-band as the granularity. It can be understood that, compared with the precoding manner in which the terminal device applies the same precoder to all resource blocks in the frequency domain of an uplink transmission, the beamforming gain of the uplink transmission corresponding to the frequency selective precoding is not limited, so the uplink transmission performance is more optimized.

In the embodiment of the present disclosure, the terminal device performs frequency selective precoding and supports at least two sub-band information determination manners. Under the triggering of the first downlink signaling, the terminal device selects the target sub-band information determination manner from the at least two sub-band information determination manners, and subsequently determines the sub-band information based on the target sub-band information determination manner, and uses the determined sub-band information to perform frequency selective precoding.

In a possible implementation, the first downlink signaling carries identification information of the target sub-band information determination manner. After receiving the first downlink signaling, the terminal device determines the target sub-band information determination manner that the first downlink signaling wants to indicate through the carried identification information of the target sub-band information determination manner, thereby selecting the target sub-band information determination manner from the at least two sub-band information determination manners.

For example, an information field in the first downlink signaling is "00", "00" is used to identify the determination manner 1 for the sub-band information, and the terminal device selects the determination manner 1 for the sub-band information from at least two sub-band information determination manners.

In another possible implementation, the first downlink signaling carries indication information for switching the determination manner for the sub-band information. After receiving the first downlink signaling, the terminal device determines that the current sub-band information determination manner needs to be switched through the indication information for switching the determination manner for the sub-band information carried by the first downlink signaling, thereby selecting the switched target sub-band information determination manner in at least two sub-band information determination manners in a predefined order or randomly.

For example, an information field in the first downlink signaling is "01", "01" is used to indicate switching the current sub-band information determination manner, and the terminal device randomly selects the determination manner 1 for the sub-band information from at least two sub-band information determination manners as the switched determination manner for the sub-band information.

Optionally, the method for determining sub-band information provided in the embodiment of the present disclosure is applicable to codebook-based PUSCH transmission; or, applicable to non-codebook-based PUSCH transmission; or, applicable to scheduling-free PUSCH transmission.

For example, the method for determining sub-band information provided in the embodiment of the present disclosure is only applicable to codebook-based PUSCH transmission.

For example, the method for determining sub-band information provided in the embodiment of the present disclosure is only applicable to non-codebook-based PUSCH transmission.

For example, the method for determining sub-band information provided in the embodiment of the present disclosure is applicable to both codebook-based PUSCH transmission and non-codebook-based PUSCH transmission.

For example, the method for determining sub-band information provided in the embodiment of the present disclosure is only applicable to scheduling-free PUSCH transmission.

In summary, in the method for determining sub-band information provided in the embodiment of the present disclosure, the terminal device supports at least two determination manners for sub-band information, when the terminal device receives the first downlink signaling, the terminal device is triggered to select a target determination manner for sub-band information from the at least two determination manners for sub-band information, so that when the terminal device performs frequency selective precoding, the determination manner for sub-band information can be flexibly adjusted to apply to different scenarios.

In an example embodiment, the sub-band information described in the embodiment of the present disclosure includes:

### (1) Sub-band size.

For example, the sub-band size refers to the number of Physical Resource Blocks (PRBs) contained in the sub-band.

### (2) The number of sub-bands.

For example, the number of sub-bands refers to the number of divided sub-bands.

Optionally, a relationship between the sub-band size and the number of sub-bands is as follows:
a sub-band size of any one of first N-1 sub-bands is equal to a first value, and a sub-band size of a last sub-band is equal to a difference between M and N-1 times the first value; or, a sub-band size of a first sub-band is equal to the difference between M and N-1 times the first value, and a sub-band size of any one of last N-1 sub-bands is equal to the first value; wherein, the first value is equal to an integer value of M divided by N, M is wideband bandwidth, and N is the number of sub-bands.

That is, in one possible implementation, in the first N-1 sub-bands, the sub-band size of each sub-band is: W_sub=floor(M/N), and the sub-band size of the last sub-band is: W_sub=M-(N-1)*floor(M/N). In another possible implementation, the sub-band size of the first sub-band is: W_sub=M-(N-1)*floor(M/N), and in the last N-1 sub-bands, the sub-band size of each sub-band is: W_sub=floor(M/N).

Optionally, when calculating the sub-band size, the starting position for calculation of the sub-band includes any of the following situations:
- The lowest numbered PRB in the PUSCH scheduling bandwidth.

It can be understood that, the embodiments of the present disclosure do not exclude the scheme that the starting position for calculation of the sub-band is the PRB with a specified number in the PUSCH scheduling bandwidth. The above-mentioned specified number can be other numbers other than the lowest number.
- The lowest numbered PRB in the Bandwidth Part (BWP) scheduling bandwidth.

It can be understood that, the embodiment of the present disclosure does not exclude the scheme that the starting position for calculation of the sub-band is a PRB with a specified number in the BWP scheduling bandwidth. The above-mentioned specified number can be other numbers other than the lowest number.
- Carrier Resource Bandwidth (CRB) #0.

It can be understood that, the embodiment of the present disclosure does not exclude the scheme that the starting position for calculation of the sub-band is a CRB with other numbers other than CRB#0.
- The starting position indicated by the network device.

Optionally, the signaling indicating the starting position by the network device includes: RRC; or, MAC CE; or, DCI.
- The starting position recommended by the terminal device.

In summary, the method for determining the sub-band information provided in this embodiment clarifies the meaning of the sub-band information and helps the terminal device support frequency selective precoding in the uplink.

In an illustrative embodiment, the at least two determination manners for the sub-band information described in the embodiment of the present disclosure include:
Manner 1: the sub-band information is determined through the indication information sent by the network device.

The indication information refers to the information obtained by the network device indicating the execution of frequency selective precoding.

Manner 2: the sub-band information is determined by a predefined manner.

The predefined manner refers to a manner defined in the relevant communication protocol in advance.

Manner 3: the sub-band information is determined according to expected information reported by the terminal device.

The expected information refers to the information constituted by expectation of the terminal device of performing frequency selective precoding.

Below, the above three manners are further explained.

Manner 1: the sub-band information is determined through the indication information sent by the network device.

Optionally, the indication information is carried in a second downlink signaling, and the second downlink signaling includes:
RRC; or, MAC CE; or, DCI.

The indication information can be carried in one second downlink signaling or can also be carried in a plurality of second downlink signalings. For example, the indication information is carried in MAC CE. For example, the indication information is carried in MAC CE and RRC.

The indication information is independently indicated or jointly indicated in the second downlink signaling. For example, the indication information is carried in a newly added information field in DCI, for independent indication. For example, the indication information is carried in an unused bit of an existing information field in the DCI, and performs joint indication with other information.

For example, the DCI is implemented as group-common DCI, and may also be implemented as other forms of DCI.

Manner 2: the sub-band information is determined by a predefined manner.
- The number of sub-bands is determined according to a predefined relationship between a RB size corresponding to actually allocated bandwidth of PUSCH and the number of sub-bands.

For example, combined with the following Table 1:

**Table 1**

| PUSCH actually allocated bandwidth (RB) | number of sub-bands |
|---|---|
| first RB number-second RB number | number 1 |
| second RB number-third RB number | number 2 |
| third RB number-fourth RB number | number 3 |
| ...... | ...... |

As shown in the above table, the actually allocated bandwidth of PUSCH in different intervals corresponds to a corresponding number of sub-bands.

In addition, it should be understood that since there is also a corresponding relationship between the number of sub-bands and the sub-band size. For example, the number of sub-bands multiplied by the sub-band size is equal to the total bandwidth value, after the number of sub-bands is determined, the sub-band size can also be calculated and determined, that is, the sub-band size is indirectly determined.
- The sub-band size is determined according to a predefined relationship between the RB size corresponding to actually allocated bandwidth of the PUSCH and the sub-band size.

For example, combined with the following Table 2:

**Table 2**

| PUSCH actually allocated bandwidth (RB) | sub-band size |
|---|---|
| first RB number-second RB number | size 1 |
| second RB number-third RB number | size 2 |
| third RB number-fourth RB number | size 3 |
| ...... | ...... |

As shown in the above table, the actually allocated bandwidth of PUSCH in different intervals corresponds to a corresponding sub-band size.

In addition, it should be understood that since there is also a corresponding relationship between the number of sub-bands and the sub-band size. For example, the number of sub-bands multiplied by the sub-band size is equal to the total bandwidth value, after the sub-band size is determined, the number of sub-bands can also be calculated and determined, that is, the number of sub-bands is indirectly determined.
- The number of sub-bands is determined according to a predefined relationship between a bandwidth resource size of the terminal device and the number of sub-bands.

The predefined relationship between the bandwidth resource size of the terminal device and the number of sub-bands can be similarly referred to above Table 1 and Table 2, which will not be repeated here.

In addition, it should be understood that since there is also a corresponding relationship between the number of sub-bands and the sub-band size. For example, the number of sub-bands multiplied by the sub-band size is equal to the total bandwidth value, after the number of sub-bands is determined, the sub-band size can also be calculated and determined, that is, the sub-band size is indirectly determined.

For example, the bandwidth resource includes: allocated Resource Allocation (RA) bandwidth resource; or, BWP resource; or, Component Carrier (CC) resource.
- The sub-band size is determined according to a predefined relationship between the bandwidth resource size of the terminal device and the sub-band size.

The predefined relationship between the bandwidth resource size of the terminal device and the sub-band size can be similarly referred to above Table 1 and Table 2, which will not be repeated here.

In addition, it should be understood that since there is also a corresponding relationship between the number of sub-bands and the sub-band size. For example, the number of sub-bands multiplied by the sub-band size is equal to the total bandwidth value, after the sub-band size is determined, the number of sub-bands can also be calculated and determined, that is, the number of sub-bands is indirectly determined.

For example, the bandwidth resource includes: allocated RA bandwidth resource; or, BWP resource; or, CC resource.
- The number of sub-bands is calculated and determined on bandwidth resource of the terminal device through a configured sub-band size.

For example, the bandwidth resource includes: allocated RA bandwidth resource; or, BWP resource; or, CC resource.
- The sub-band size is calculated and determined on the bandwidth resource of the terminal device through a configured number of sub-bands.

For example, the bandwidth resource includes: allocated RA bandwidth resource; or, BWP resource; or, CC resource.
- The number of sub-bands is calculated and determined on the bandwidth resource of the terminal device through a starting RB position of actual resource allocation on the bandwidth resource of the terminal device and the configured sub-band size.

In the case where the bandwidth resource of the terminal device is larger than the actually scheduled bandwidth resource, the actually scheduled bandwidth resource corresponds to a starting RB position of the actual resource allocation, then the number of sub-bands is calculated and determined on the bandwidth resource through the two parameters of the starting RB position of the actual resource allocation on the bandwidth resource and the configured sub-band size.

For example, the bandwidth resource includes: allocated RA bandwidth resource; or, BWP resource; or, CC resource.
- The sub-band size is calculated and determined on the bandwidth resource of the terminal device through a starting RB position of actual resource allocation on the bandwidth resource of the terminal device and the configured number of sub-bands.

In the case where the bandwidth resource of the terminal device is larger than the actually scheduled bandwidth resource, the actually scheduled bandwidth resource corresponds to a starting RB position of the actual resource allocation, then the sub-band size is calculated and determined on the bandwidth resource through the two parameters of the starting RB position of the actual resource allocation on the bandwidth resource and the configured number of sub-bands.

For example, the bandwidth resource includes: allocated RA bandwidth resource; or, BWP resource; or, CC resource.

Manner 3: the sub-band information is determined according to expected information reported by the terminal device.

In this manner, the network device will use the expected information reported by the terminal device for uplink reception.
- The number of sub-bands is determined according to an expected number of sub-bands reported by the terminal device.
- The sub-band size is determined according to an expected sub-band size reported by the terminal device; the number of sub-bands is calculated and determined on bandwidth resource of the terminal device through the sub-band size.
- The sub-band size is determined according to an expected sub-band size reported by the terminal device.
- The number of sub-bands is determined according to the expected number of sub-bands reported by the terminal device; the sub-band size is calculated and determined on the bandwidth resource of the terminal device through the number of sub-bands.

Optionally, in manner 3, the expected information is carried in the first uplink signaling, and the first uplink signaling includes: RRC; or, MAC CE; or, Uplink Control Information (UCI).

The expected information can be carried in one first uplink signaling, or can also be carried in a plurality of first uplink signalings. For example, the expected information is carried in MAC CE. For example, the expected information is carried in MAC CE and RRC.

The expected information is indicated independently or jointly in the first uplink signaling. For example, the expected information is carried in a newly added information field in UCI, for independent indication. For example, the expected information is carried in an unused bit of an existing information field in UCI, and performs joint indication with other information.

In an illustrative embodiment, the terminal device correspondingly has a default manner for determining sub-band information.

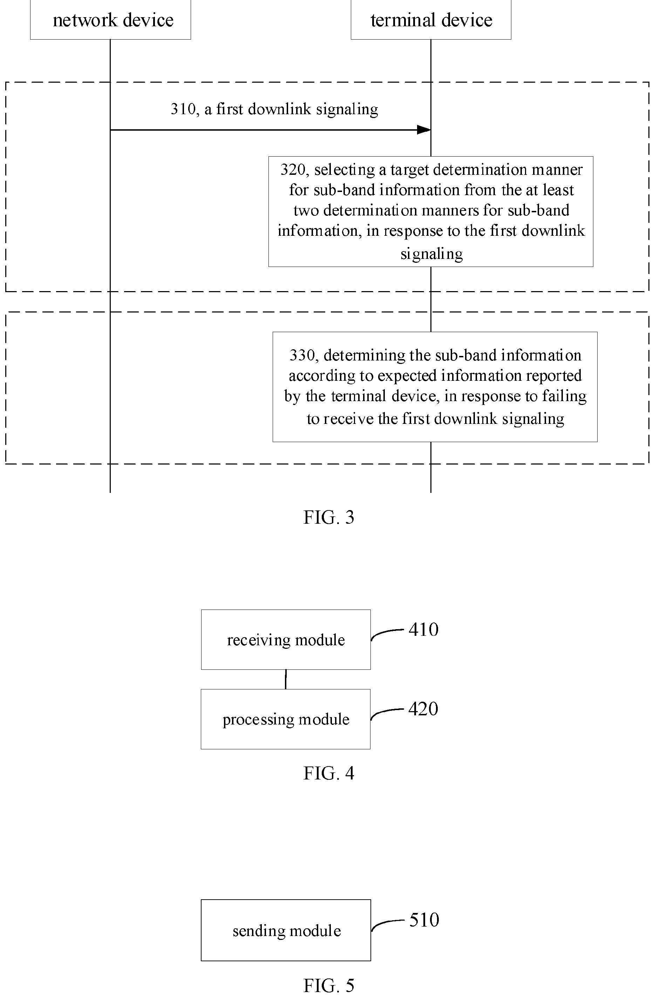

FIG. 3 shows a process flow chart of a method for determining sub-band information provided by an example embodiment of the present disclosure, which is applied in the communication system shown in FIG. 1, and the method includes following steps.

Step 310, the network device sends a first downlink signaling to the terminal device.

The implementation of this step can refer to the above step 210, which will not be repeated here.

Step 320, the terminal device selects a target determination manner for sub-band information from the at least two determination manners for sub-band information, in response to the first downlink signaling.

The implementation of this step can refer to the above step 220, which will not be repeated here.

When the above steps 310 and 320 are not actually implemented, the terminal device performs the following step 330.

Step 330, the terminal device determines the sub-band information according to expected information reported by the terminal device, in response to failing to receive the first downlink signaling.

That is, for the manner of determining the sub-band information according to the expected information reported by the terminal device (manner 3 in the above), it can be the default manner for determining the sub-band information of the terminal device. When the network device does not indicate the first downlink signaling, the terminal device determines the sub-band information in this way.

It should be understood that, the default sub-band information determination manner may also be other manners, and the embodiments of the present disclosure do not limit this.

In summary, in the method for determining sub-band information provided in this embodiment, the terminal device correspondingly has a default manner for determining sub-band information, so that the terminal device can determine the sub-band information without the indication of the first downlink signaling, saving the execution overhead of frequency selective precoding.

The above embodiments can be implemented separately or in combination, and the embodiments of the present disclosure do not limit this.

The above method for determining sub-band information executed by the terminal device can be implemented separately as a method for determining sub-band information on the terminal device side; the above method for determining sub-band information executed by the network device can be implemented separately as a method for determining sub-band information on the network device side.

FIG. 4 shows a block diagram of an apparatus for determining sub-band information provided by an example embodiment of the present disclosure. The apparatus can be implemented as part or all of a terminal device through software, hardware, or a combination of the two. The apparatus includes: a receiving module 410 and a processing module 420;

the receiving module 410 is configured to receive a first downlink signaling; and

the processing module 420 is configured to select a target determination manner for sub-band information from the at least two determination manners for sub-band information, in response to the first downlink signaling;
wherein, the sub-band information is information required by the apparatus to perform frequency selective precoding.

In some embodiments, the at least two determination manners for sub-band information include:
determining the sub-band information through indication information sent by a network device;
   or,
determining the sub-band information through a predefined manner;
   or,
determining the sub-band information according to expected information reported by the apparatus.

In some embodiments, the sub-band information includes:
a sub-band size;
   or,
a number of sub-bands.

In some embodiments, the indication information is carried in a second downlink signaling, and the second downlink signaling includes:

Radio Resource Control (RRC); or, Medium Access Control Control Element (MAC CE); or, Downlink Control Information (DCI).

In some embodiments, determining the sub-band information through a predefined manner includes:
determining the number of sub-bands according to a predefined relationship between a resource block (RB) size corresponding to actually allocated bandwidth of a PUSCH and the number of sub-bands;
   or,
determining the sub-band size according to a predefined relationship between the RB size corresponding to actually allocated bandwidth of the PUSCH and the sub-band size;
   or,
determining the number of sub-bands according to a predefined relationship between a bandwidth resource size of the apparatus and the number of sub-bands;
   or,
determining the sub-band size according to a predefined relationship between the bandwidth resource size of the apparatus and the sub-band size;
   or,
calculating and determining the number of sub-bands on bandwidth resource of the apparatus through a configured sub-band size;
   or,
calculating and determining the sub-band size on the bandwidth resource of the apparatus through a configured number of sub-bands;
   or,
calculating and determining the number of sub-bands on the bandwidth resource of the apparatus through a starting RB position of actual resource allocation on the bandwidth resource of the apparatus and the configured sub-band size;
   or,
calculating and determining the sub-band size on the bandwidth resource of the apparatus through a starting RB position of actual resource allocation on the bandwidth resource of the apparatus and the configured number of sub-bands.

In some embodiments, the bandwidth resource includes:
allocated Resource Allocation (RA) bandwidth resource; or, Bandwidth Part (BWP) resource; or, Component Carrier (CC) resource.

In some embodiments, determining the sub-band information according to expected information reported by the apparatus includes:
determining the number of sub-bands according to an expected number of sub-bands reported by the apparatus;
   or,
determining the sub-band size according to an expected sub-band size reported by the apparatus; calculating and determining the number of sub-bands on bandwidth resource of the apparatus through the sub-band size;
   or,
determining the sub-band size according to an expected sub-band size reported by the apparatus;
   or,
determining the number of sub-bands according to the expected number of sub-bands reported by the apparatus; calculating and determining the sub-band size on the bandwidth resource of the apparatus through the number of sub-bands.

In some embodiments, the expected information is carried in a first uplink signaling, and the first uplink signaling includes:
RRC;
   or,
MAC CE;
   or,
Uplink Control Information (UCI).

In some embodiments, a relationship between the sub-band size and the number of sub-bands is as follows:
a sub-band size of any one of first N-1 sub-bands is equal to a first value, and a sub-band size of a last sub-band is equal to a difference between M and N-1 times the first value;
   or,
a sub-band size of a first sub-band is equal to the difference between M and N-1 times the first value, and a sub-band size of any one of last N-1 sub-bands is equal to the first value;
wherein, the first value is equal to an integer value of M divided by N, M is wideband bandwidth, and N is the number of sub-bands.

In some embodiments, a starting position for calculation of the sub-band includes:
a lowest numbered Physical Resource Block (PRB) in PUSCH scheduling bandwidth;
   or,
a lowest numbered PRB in Bandwidth Part (BWP) scheduling bandwidth;
   or,
Carrier Resource Bandwidth (CRB)#0;
   or,
a starting position indicated by the network device;
   or,
a starting position recommended by the apparatus;
wherein, the starting position for calculation of the sub-band is used to calculate the sub-band size.

In some embodiments, the processing module 420 is configured to determine the sub-band information according to expected information reported by the apparatus, in response to failing to receive the first downlink signaling.

In some embodiments, the first downlink signaling includes:
RRC; or, MAC CE; or, DCI.

In some embodiments, the method for determining the sub-band information is applicable to codebook-based PUSCH transmission;
or,
the method for determining the sub-band information is applicable to non-codebook-based PUSCH transmission;
   or,
the method for determining the sub-band information is applicable to scheduling-free PUSCH transmission.

FIG. 5 shows a block diagram of an apparatus for determining sub-band information provided by an example embodiment of the present disclosure. The apparatus can be implemented as part or all of a network device through software, hardware, or a combination of the two. The apparatus includes: a sending module 510;
the sending module 510 is configured to send a first downlink signaling to a terminal device, such that the terminal device selects a target determination manner for sub-band information from at least two determination manners for sub-band information, in response to the first downlink signaling;
wherein, the sub-band information is information required by the terminal device to perform frequency selective precoding.

In some embodiments, the at least two determination manners for sub-band information include:
the terminal device determining the sub-band information through indication information sent by the apparatus;
   or,
the terminal device determining the sub-band information through a predefined manner;
   or,
the terminal device determining the sub-band information according to expected information reported by the terminal device.

In some embodiments, the sub-band information includes:
a sub-band size;
   or,
a number of sub-bands.

In some embodiments, the indication information is carried in a second downlink signaling, and the second downlink signaling includes:

Radio Resource Control (RRC); or, Medium Access Control Control Element (MAC CE); or, Downlink Control Information (DCI).

In some embodiments, the terminal device determining the sub-band information through a predefined manner includes:
the terminal device determining the number of sub-bands according to a predefined relationship between a resource block (RB) size corresponding to actually allocated bandwidth of a PUSCH and the number of sub-bands;
   or,
the terminal device determining the sub-band size according to a predefined relationship between the RB size corresponding to actually allocated bandwidth of the PUSCH and the sub-band size;
   or,
the terminal device determining the number of sub-bands according to a predefined relationship between a bandwidth resource size of the terminal device and the number of sub-bands;
   or,
the terminal device determining the sub-band size according to a predefined relationship between the bandwidth resource size of the terminal device and the sub-band size;
   or,
the terminal device calculating and determining the number of sub-bands on bandwidth resource of the terminal device through a configured sub-band size;
   or,
the terminal device calculating and determining the sub-band size on the bandwidth resource of the terminal device through a configured number of sub-bands;
   or,
the terminal device calculating and determining the number of sub-bands on the bandwidth resource of the terminal device through a starting RB position of actual resource allocation on the bandwidth resource of the terminal device and the configured sub-band size;
   or,
the terminal device calculating and determining the sub-band size on the bandwidth resource of the terminal device through a starting RB position of actual resource allocation on the bandwidth resource of the terminal device and the configured number of sub-bands.

In some embodiments, the bandwidth resource includes:
allocated Resource Allocation (RA) bandwidth resource; or, Bandwidth Part (BWP) resource; or, Component Carrier (CC) resource.

In some embodiments, the terminal device determining the sub-band information according to expected information reported by the terminal device includes:
the terminal device determining the number of sub-bands according to an expected number of sub-bands reported by the terminal device;
   or,
the terminal device determining the sub-band size according to an expected sub-band size reported by the terminal device; calculating and determining the number of sub-bands on bandwidth resource of the terminal device through the sub-band size;
   or,
the terminal device determining the sub-band size according to an expected sub-band size reported by the terminal device;
   or,
the terminal device determining the number of sub-bands according to the expected number of sub-bands reported by the terminal device; calculating and determining the sub-band size on the bandwidth resource of the terminal device through the number of sub-bands.

In some embodiments, the expected information is carried in a first uplink signaling, and the first uplink signaling includes:
RRC; or, MAC CE; or, Uplink Control Information (UCI).

In some embodiments, a relationship between the sub-band size and the number of sub-bands is as follows:
a sub-band size of any one of first N-1 sub-bands is equal to a first value, and a sub-band size of a last sub-band is equal to a difference between M and N-1 times the first value;
   or,
a sub-band size of a first sub-band is equal to the difference between M and N-1 times the first value, and a sub-band size of any one of last N-1 sub-bands is equal to the first value;
wherein, the first value is equal to an integer value of M divided by N, M is wideband bandwidth, and N is the number of sub-bands.

In some embodiments, a starting position for calculation of the sub-band includes:
a lowest numbered Physical Resource Block (PRB) in PUSCH scheduling bandwidth;
   or,
a lowest numbered PRB in Bandwidth Part (BWP) scheduling bandwidth;
   or,
Carrier Resource Bandwidth (CRB)#0;
   or,
a starting position indicated by the apparatus;
   or,
a starting position recommended by the terminal device;
wherein, the starting position for calculation of the sub-band is used to calculate the sub-band size.

In some embodiments, the terminal device determines the sub-band information according to expected information reported by the terminal device, in response to failing to receive the first downlink signaling.

In some embodiments, the first downlink signaling includes:
RRC; or, MAC CE; or, DCI.

In some embodiments, the method for determining the sub-band information is applicable to codebook-based PUSCH transmission;
or,
the method for determining the sub-band information is applicable to non-codebook-based PUSCH transmission;
   or,
the method for determining the sub-band information is applicable to scheduling-free PUSCH transmission.

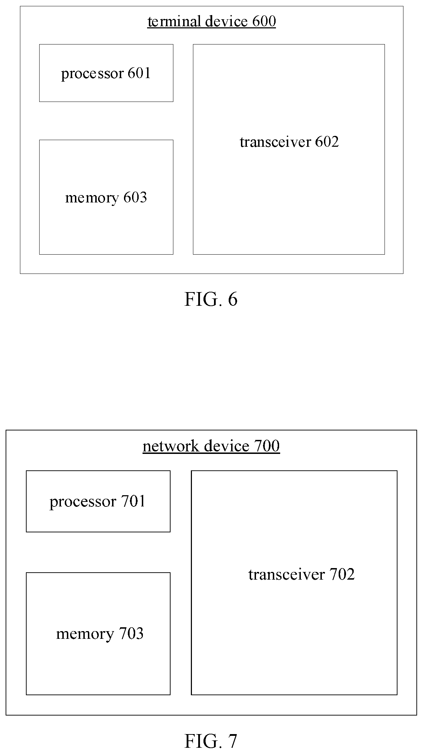

FIG. 6 shows a schematic diagram of the structure of a terminal device provided by an example embodiment of the present application, and the device 600 includes: a processor 601, a transceiver 602 and a memory 603.

The processor 601 includes one or more processing cores, and the processor 601 executes various functional applications by running software programs and modules.

The transceiver 602 can be used to receive and send information, and the transceiver 602 can be a communication chip.

The memory 603 can be used to store computer programs, and the processor 601 is used to execute the computer program to implement the various steps performed by the terminal device in the above method embodiment.

In addition, the memory 603 can be implemented by any type of transitory or non-transitory storage device or a combination thereof, and the transitory or non-transitory storage device includes but is not limited to: random access memory (RAM) and read-only memory (ROM), erasable programmable read-only memory (EPROM), electrically erasable programmable read-only memory (EEPROM), flash memory or other solid-state storage technology, compact disc read-only memory (CD-ROM), high-density digital video disc (DVD) or other optical storage, cassette, tape, disk storage or other magnetic storage device.

FIG. 7 shows a schematic diagram of the structure of a network device provided by an example embodiment of the present application, and the device 700 includes: a processor 701, a transceiver 702 and a memory 703.

The processor 701 includes one or more processing cores, and the processor 701 executes various functional applications by running software programs and modules.

The transceiver 702 can be used to receive and send information, and the transceiver 702 can be a communication chip.

The memory 703 can be used to store a computer program, and the processor 701 is used to execute the computer program to implement the various steps performed by the network device in the above method embodiment.

In addition, the memory 703 can be implemented by any type of transitory or non-transitory storage device or a combination thereof, and the transitory or non-transitory storage device includes but is not limited to: random access memory (RAM) and read-only memory (ROM), erasable programmable read-only memory (EPROM), electrically erasable programmable read-only memory (EEPROM), flash memory or other solid-state storage technology, compact disc read-only memory (CD-ROM), high-density digital video disc (DVD) or other optical storage, tape cassette, tape, disk storage or other magnetic storage device.

An example embodiment of the present disclosure also provides a computer-readable storage medium, in which at least one instruction, at least one program, code set or instruction set is stored, and the at least one instruction, at least one program, code set or instruction set is loaded and executed by the processor to implement the sub-band information determination method provided by the above-mentioned various method embodiments.

An example embodiment of the present disclosure also provides a chip, the chip includes a programmable logic circuit and/or a program instruction, and when the chip is run, it is used to implement the sub-band information determination method described in the above aspects.

An example embodiment of the present disclosure also provides a computer program product, the computer program product includes a computer instruction, and the computer instruction is stored in a computer-readable storage medium; the processor of the computer device reads the computer instruction from the computer-readable storage medium, and the processor executes the computer instruction, so that the computer device executes the sub-band information determination method provided by the above-mentioned various method embodiments.

It should be understood that the terms "system" and "network" are often used interchangeably in this article. The term "and/or" in this article is only a description of the association relationship of associated objects, indicating that there may be three kinds of relationships. For example, A and/or B can represent: A exists alone, A and B exist at the same time, and B exists alone. In addition, the character "/" in this article generally indicates that the objects associated before and after are in an "or" relationship. It should also be understood that the "indication" mentioned in the embodiments of the present disclosure can be direct indication, indirect indication, or indication of an association relationship. For example, A indicates B, which can mean that A directly indicates B, for example, B can be obtained through A; it can also mean that A indirectly indicates B, for example, A indicates C, and B can be obtained through C; it can also mean that there is an association relationship between A and B. It should also be understood that the "correspondence" mentioned in the embodiments of the present disclosure can mean that there is a direct or indirect correspondence relationship between the two, or it can mean that there is an association relationship between the two, or it can mean the relationship between indication and being indicated, configuration and being configured, etc. It should also be understood that the "predefined", "protocol agreement", "predetermined" or "predefined rules" mentioned in the embodiments of the present disclosure can be implemented by pre-saving corresponding codes, tables or other manners that can be used to indicate relevant information in devices (for example, including network devices and terminal devices), and the present disclosure does not limit its specific implementation. For example, "predefined" can refer to the definition in the protocol. It should also be understood that, in the embodiments of the present disclosure, the "protocol" can refer to a standard protocol in the field of communication, for example, it can include the LTE protocol, NR protocol and related protocols used in future communication systems, and the present disclosure does not limit this.

Other embodiments of this disclosure will be readily apparent to those skilled in the art from consideration of the specification and practice of the disclosure disclosed herein. This present disclosure is intended to cover any modification, use or adaptation change of this disclosure, and these modifications, uses or adaptation changes follow the general principles of this disclosure and include common knowledge or conventional technical means in the art, which are not disclosed in this disclosure. The specification and embodiments are to be considered exemplary only, with a true scope and spirit of the disclosure being indicated by the following claims.

It should be understood that this disclosure is not limited to the precise constructions which have been described above and shown in the drawings, and various modifications and changes may be made without departing from the scope thereof. The scope of this disclosure is limited only by the scope of the appended claims.

## Claims

1. A method for determining sub-band information, wherein the method is performed by a terminal device, the terminal device supports at least two determination manners for sub-band information, and the method comprises:
receiving a first downlink signaling; and
selecting a target determination manner for sub-band information from the at least two determination manners for sub-band information, in response to the first downlink signaling;
wherein, the sub-band information is information required by the terminal device to perform frequency selective precoding.

2. The method according to claim 1, wherein the at least two determination manners for sub-band information comprise:
determining the sub-band information through indication information sent by a network device;
or,
determining the sub-band information through a predefined manner;
or,
determining the sub-band information according to expected information reported by the terminal device.

3. The method according to claim 2, wherein the sub-band information comprises:
a sub-band size;
or,
a number of sub-bands.

4. The method according to claim 2, wherein the indication information is carried in a second downlink signaling, and the second downlink signaling comprises:
Radio Resource Control, RRC;
or,
Medium Access Control Control Element, MAC CE;
or,
Downlink Control Information, DCI.

5. The method according to claim 3, wherein determining the sub-band information through a predefined manner comprises:
determining the number of sub-bands according to a predefined relationship between a resource block, RB, size corresponding to actually allocated bandwidth of a Physical Downlink Shared Channel, PUSCH, and the number of sub-bands;
or,
determining the sub-band size according to a predefined relationship between the RB size corresponding to actually allocated bandwidth of the PUSCH and the sub-band size;
or,
determining the number of sub-bands according to a predefined relationship between a bandwidth resource size of the terminal device and the number of sub-bands;
or,
determining the sub-band size according to a predefined relationship between the bandwidth resource size of the terminal device and the sub-band size;
or,
calculating and determining the number of sub-bands on bandwidth resource of the terminal device through a configured sub-band size;
or,
calculating and determining the sub-band size on the bandwidth resource of the terminal device through a configured number of sub-bands;
or,
calculating and determining the number of sub-bands on the bandwidth resource of the terminal device through a starting RB position of actual resource allocation on the bandwidth resource of the terminal device and the configured sub-band size;
or,
calculating and determining the sub-band size on the bandwidth resource of the terminal device through a starting RB position of actual resource allocation on the bandwidth resource of the terminal device and the configured number of sub-bands.

6. The method according to claim 5, wherein the bandwidth resource comprises:
allocated Resource Allocation, RA, bandwidth resource; or, Bandwidth Part, BWP, resource; or, Component Carrier, CC, resource.

7. The method according to claim 3, wherein determining the sub-band information according to expected information reported by the terminal device comprises:
determining the number of sub-bands according to an expected number of sub-bands reported by the terminal device;
or,
determining the sub-band size according to an expected sub-band size reported by the terminal device; calculating and determining the number of sub-bands on bandwidth resource of the terminal device through the sub-band size;
or,
determining the sub-band size according to an expected sub-band size reported by the terminal device;
or,
determining the number of sub-bands according to the expected number of sub-bands reported by the terminal device; calculating and determining the sub-band size on the bandwidth resource of the terminal device through the number of sub-bands.

8. The method according to claim 2, wherein the expected information is carried in a first uplink signaling, and the first uplink signaling comprises:
RRC;
or,
MAC CE;
or,
Uplink Control Information, UCI.

9. The method according to claim 3, wherein a relationship between the sub-band size and the number of sub-bands is as follows:
a sub-band size of any one of first N-1 sub-bands is equal to a first value, and a sub-band size of a last sub-band is equal to a difference between M and N-1 times the first value;
or,
a sub-band size of a first sub-band is equal to the difference between M and N-1 times the first value, and a sub-band size of any one of last N-1 sub-bands is equal to the first value;
wherein, the first value is equal to an integer value of M divided by N, M is wideband bandwidth, and N is the number of sub-bands.

10. The method according to claim 3, wherein a starting position for calculation of the sub-band comprises:
a lowest numbered Physical Resource Block, PRB, in PUSCH scheduling bandwidth;
or,
a lowest numbered PRB in Bandwidth Part, BWP, scheduling bandwidth;
or,
Carrier Resource Bandwidth, CRB#0;
or,
a starting position indicated by the network device;
or,
a starting position recommended by the terminal device;
wherein, the starting position for calculation of the sub-band is used to calculate the sub-band size.

11. The method according to claim 2, further comprising:
determining the sub-band information according to expected information reported by the terminal device, in response to failing to receive the first downlink signaling.

12. The method according to claim 1, wherein the first downlink signaling comprises:
RRC;
or,
MAC CE;
or,
DCI.

13. The method according to claim 1, wherein
the method for determining the sub-band information is applicable to codebook-based PUSCH transmission;
or,
the method for determining the sub-band information is applicable to non-codebook-based PUSCH transmission;
or,
the method for determining the sub-band information is applicable to scheduling-free PUSCH transmission.

14. A method for determining sub-band information, performed by a network device, and the method comprising:
sending a first downlink signaling to a terminal device, such that the terminal device selects a target determination manner for sub-band information from at least two determination manners for sub-band information, in response to the first downlink signaling;
wherein, the sub-band information is information required by the terminal device to perform frequency selective precoding.

15. The method according to claim 14, wherein the at least two determination manners for sub-band information comprise:
the terminal device determining the sub-band information through indication information sent by the network device;
or,
the terminal device determining the sub-band information through a predefined manner;
or,
the terminal device determining the sub-band information according to expected information reported by the terminal device.

16. The method according to claim 15, wherein the sub-band information comprises:
a sub-band size;
or,
a number of sub-bands.

17. The method according to claim 15, wherein the indication information is carried in a second downlink signaling, and the second downlink signaling comprises:
Radio Resource Control, RRC;
or,
Medium Access Control Control Element, MAC CE;
or,
Downlink Control Information, DCI.

18. The method according to claim 16, wherein the terminal device determining the sub-band information through a predefined manner comprises:
the terminal device determining the number of sub-bands according to a predefined relationship between a resource block, RB, size corresponding to actually allocated bandwidth of a Physical Downlink Shared Channel, PUSCH, and the number of sub-bands;
or,
the terminal device determining the sub-band size according to a predefined relationship between the RB size corresponding to actually allocated bandwidth of the PUSCH and the sub-band size;
or,
the terminal device determining the number of sub-bands according to a predefined relationship between a bandwidth resource size of the terminal device and the number of sub-bands;
or,
the terminal device determining the sub-band size according to a predefined relationship between the bandwidth resource size of the terminal device and the sub-band size;
or,
the terminal device calculating and determining the number of sub-bands on bandwidth resource of the terminal device through a configured sub-band size;
or,
the terminal device calculating and determining the sub-band size on the bandwidth resource of the terminal device through a configured number of sub-bands;
or,
the terminal device calculating and determining the number of sub-bands on the bandwidth resource of the terminal device through a starting RB position of actual resource allocation on the bandwidth resource of the terminal device and the configured sub-band size;
or,
the terminal device calculating and determining the sub-band size on the bandwidth resource of the terminal device through a starting RB position of actual resource allocation on the bandwidth resource of the terminal device and the configured number of sub-bands.

19. The method according to claim 18, wherein the bandwidth resource comprises:
allocated Resource Allocation, RA, bandwidth resource; or, Bandwidth Part, BWP, resource; or, Component Carrier, CC, resource.

20. The method according to claim 16, wherein the terminal device determining the sub-band information according to expected information reported by the terminal device comprises:
the terminal device determining the number of sub-bands according to an expected number of sub-bands reported by the terminal device;
or,
the terminal device determining the sub-band size according to an expected sub-band size reported by the terminal device; calculating and determining the number of sub-bands on bandwidth resource of the terminal device through the sub-band size;
or,
the terminal device determining the sub-band size according to an expected sub-band size reported by the terminal device;
or,
the terminal device determining the number of sub-bands according to the expected number of sub-bands reported by the terminal device; calculating and determining the sub-band size on the bandwidth resource of the terminal device through the number of sub-bands.

21. The method according to claim 15, wherein the expected information is carried in a first uplink signaling, and the first uplink signaling comprises:
RRC;
or,
MAC CE;
or,
Uplink Control Information, UCI.

22. The method according to claim 16, wherein a relationship between the sub-band size and the number of sub-bands is as follows:
a sub-band size of any one of first N-1 sub-bands is equal to a first value, and a sub-band size of a last sub-band is equal to a difference between M and N-1 times the first value;
or,
a sub-band size of a first sub-band is equal to the difference between M and N-1 times the first value, and a sub-band size of any one of last N-1 sub-bands is equal to the first value;
wherein, the first value is equal to an integer value of M divided by N, M is wideband bandwidth, and N is the number of sub-bands.

23. The method according to claim 16, wherein a starting position for calculation of the sub-band comprises:
a lowest numbered Physical Resource Block, PRB, in PUSCH scheduling bandwidth;
or,
a lowest numbered PRB in Bandwidth Part, BWP, scheduling bandwidth;
or,
Carrier Resource Bandwidth, CRB#0;
or,
a starting position indicated by the network device;
or,
a starting position recommended by the terminal device;
wherein, the starting position for calculation of the sub-band is used to calculate the sub-band size.

24. The method according to claim 15, further comprising:
the terminal device determining the sub-band information according to expected information reported by the terminal device, in response to failing to receive the first downlink signaling.

25. The method according to claim 14, wherein the first downlink signaling comprises:
RRC;
or,
MAC CE;
or,
DCI.

26. The method according to claim 14, wherein
the method for determining the sub-band information is applicable to codebook-based PUSCH transmission;
or,
the method for determining the sub-band information is applicable to non-codebook-based PUSCH transmission;
or,
the method for determining the sub-band information is applicable to scheduling-free PUSCH transmission.

27. An apparatus for determining sub-band information, wherein the apparatus comprises: a receiving module and a processing module;
wherein the receiving module is configured to receive a first downlink signaling; and
the processing module is configured to select a target determination manner for sub-band information from the at least two determination manners for sub-band information, in response to the first downlink signaling;
wherein, the sub-band information is information required by the apparatus to perform frequency selective precoding.

28. An apparatus for determining sub-band information, wherein the apparatus comprises: a sending module;
wherein the sending module is configured to send a first downlink signaling to a terminal device, such that the terminal device selects a target determination manner for sub-band information from at least two determination manners for sub-band information, in response to the first downlink signaling;
wherein, the sub-band information is information required by the terminal device to perform frequency selective precoding.

29. A terminal device, comprising:
a processor; and
a transceiver connected to the processor;
wherein, the processor is configured to load and execute executable instructions to implement the method for determining sub-band information according to any one of claims 1 to 13.

30. A network device, comprising:
a processor; and
a transceiver connected to the processor;
wherein, the processor is configured to load and execute executable instructions to implement the method for determining sub-band information according to any one of claims 14 to 26.

31. A computer-readable storage medium, having at least one instruction, at least one program, a code set or an instruction set stored thereon, wherein the at least one instruction, the at least one program, the code set or the instruction set is loaded and executed by a processor to implement the method for determining sub-band information according to any one of claims 1 to 26.
